# EUROPEAN PATENT APPLICATION

(11) **EP 2 005 865 A1**
(43) Date of publication of application: **24.12.2008**
(21) Application number: 08252060.2
(22) Date of filing: 16.06.2008
(51) Int. Cl.: A47J 31/057, A47J 31/44

(54) **Coffee or tea maker**

(30) Priority: 21.06.2007 TW 96122203
(71) Applicant: Lee, Wen-Ching, Taipei (TW)
(72) Inventor: Lee, Wen-Ching, Taipei (TW)
(74) Representative: Brown, Michael Stanley

(57) **Abstract**

A coffee or tea maker includes a base (10), an operation cup (30), a thermal carafe (40) and a control panel (80). A container support (50) is located on the base (10) and a container is located on the container support (50). The container includes a heater (21) and a temperature sensor (24) which is electrically connected with a control circuit in the control panel (80). A release port (22) is defined in a bottom of the container and a pipe (14) is connected between the release port (22) and the pouring port (13). The coffee or tea maker automatically heats the water, supplies the water into the operation cup (30) to make coffee or tea and stores the coffee or tea in the thermal carafe (40) without extra help from the users.

## Description

### BACKGROUND OF THE INVENTION

### (1)FIELD OF THE INVENTION

The present invention relates to a coffee or tea maker which can make coffee or tea in one command without extra steps operated by the users.

### (2)DESCRIPTION OF THE PRIOR ART

A conventional coffee or tea maker is used widely in almost everyday life and the existed conventional coffee or tea makers includes two parts which are water heating portion and the beverage making portion which is operated in separate from the water heating portion. When in operation of the coffee or tea makers, the users have to operate the two portions individually and this is not convenient for some users.

The present invention intends to provide a coffee or tea maker which automatically makes the coffee or tea by one command and this meets most users needs.

### SUMMARY OF THE INVENTION

The present invention relates to a coffee or tea maker which comprises a base, an operation cup, a thermal carafe and a control panel, wherein the thermal carafe is removably rested on the base and has a heater at a bottom thereof. The operation cup is located on a high board on the base and has a drain hole defined in an underside thereof. A pouring port is defined in the base so as to provide water to the operation cup. The high board includes a top hole and a bottom hole. The drain hole of the operation cup is located corresponding to the top and bottom holes. An electro-magnetic valve is located between the top and bottom holes. The control panel includes a timer switch which is electrically connected with the electro-magnetic valve. The bottom hole is located above the thermal carafe. A container support is located on the base and a container is located on the container support. The container includes a heater and a temperature sensor which is electrically connected with a control circuit in the control panel. The control circuit controls the heater of the container. A release port is defined in a bottom of the container and a pipe is connected between the release portion and the pouring port.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a partial cross sectional view of the coffee or tea maker of the present invention;
Fig. 2 shows the control panel of the coffee or tea maker of the present invention, and
Fig. 3 shows another embodiment of the coffee or tea maker of the present invention.

### DETAILED DESCRIPTION OF THE PREFERRED EMBODIMENTS

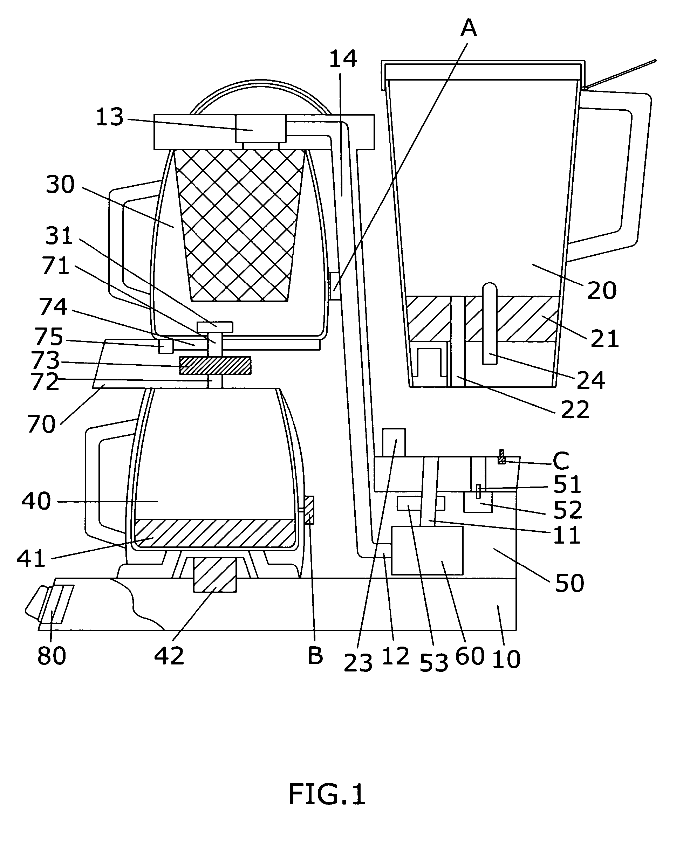

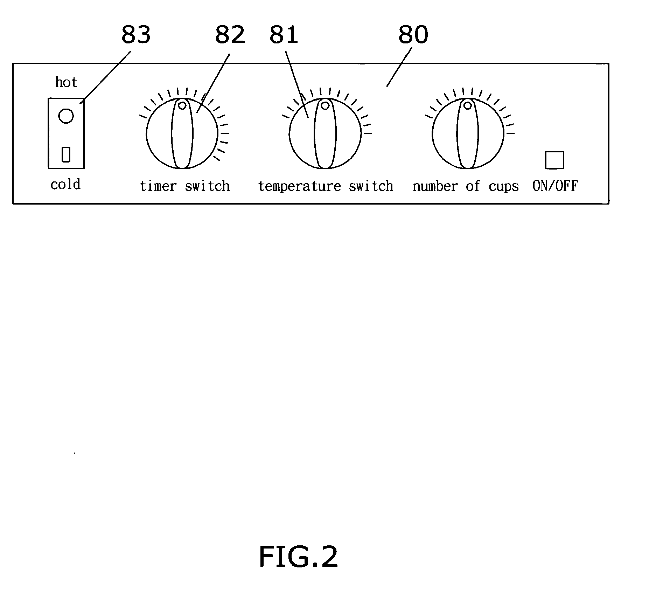

Referring to Figs. 1 and 2, the coffee or tea maker of the present invention comprises a base 10, an operation cup 30, a thermal carafe 40 and a control panel 80. The thermal carafe 40 is removably rested on the base 10 and has a heater 41 at a bottom thereof so as to keep the coffee or tea warm. The operation cup 30 is located on a high board 70 on the base 10 and has a drain hole 31 defined in an underside thereof. A pouring port 13 is defined in the base 10 so as to provide water to the operation cup 30. The high board 70 includes a top hole 71 and a bottom hole 72. The drain hole 31 of the operation cup 30 is located corresponding to the top and bottom holes 71, 72. An electro-magnetic valve 73 is located between the top and bottom holes 71, 72. The control panel 80 includes a timer switch 82 which is electrically connected with the electro-magnetic valve 73. The bottom hole 72 is located above the thermal carafe 40. A container support 50 is located on the base 10 and a container is 20 located on the container support 50. The container 20 includes a heater 21 and a temperature sensor 24 which is electrically connected with a control circuit in the control panel 80. The control circuit controls the heater 21 of the container 20. A release port 22 is defined in a bottom of the container 20 and a pipe is connected between the release portion 22 and the pouring port 13.

The container support 50 and the container 20 are located beside the operation cup 30 and the thermal carafe 40. The pipe includes an inlet 11 which communicates with the release port 22 of the container 20, a level switch 53 which controls a water pump 60, an outlet 12 and a path 14 connected between the outlet 12 and the pouring port 13. The container support 50, the high board 70 and the pouring port 13 are made in one piece in which the path 14 is located.

A control circuit for activating the water pump 60 when a pre-set temperature is reached is electrically connected with the temperature sensor 24 and the water pump 60. The level switch 53 is electrically connected with the level controller on the control panel 80. The level controller controls a water level of the container 20. The control circuit includes the temperature sensor 24 and electrodes 51 in the container support 50. The electrodes 51 are cooperated with the temperature sensor 24 and electrically connected with a temperature switch 81 on the control panel 80 and a temperature controller 75 which controls the heater 21 in the container 20 and the water pump 60.

The heater 41 includes a semi-conductor and the base 10 includes a power supply 42 which provides electric power to the semi-conductor. The control panel 80 includes a hot-cold switch 83 which is electrically connected with the power supply 42 and changes positive and negative poles of the power supply 42.

The container 20 includes a limit switch 54 for protecting the container from being overly heated and a limit switch "B" is located on the base 10 to detect the thermal carafe 40 and connected to the power supply 42 and the electro-magnetic valve 73 in series. The high board 70 includes a limit switch "A" which detects the operation cup 30 and the limit switch "A" is electrically connected to the electro-magnetic valve 73 in series.

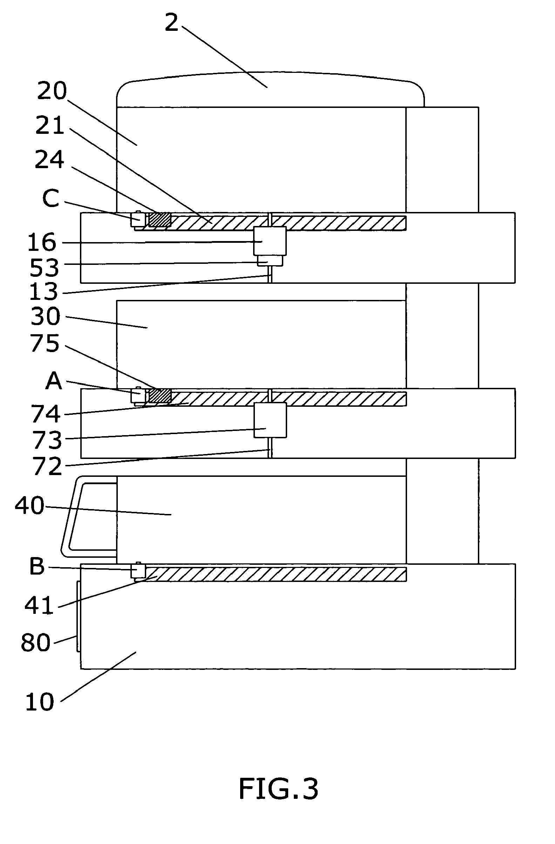

As shown in Fig. 3, a second embodiment of the coffee or tea maker is disclosed wherein the container 20 and the container support 50 are located above the operation cup 30. The pipe includes the release port 22 in the container 20, a water outlet 23 and an electro-magnetic valve 16 located between the release port 22 and the pouring port 13. The pipe further includes a level switch 53 which sends a signal to the control panel 80 to set soaking period when the water in the container 20 is completely released.

When in use, the water pump 60 is in communication with the inlet 11 and the outlet 12, when the temperature of the water in the container 20 reaches a pre-set temperature, the heater 21 is shut down and the water pump 60 pumps the water in the container 20 into the operation cup 30 to make coffee or tea which is released via the top hole 71 and the bottom hole 72 and enters into the thermal carafe 40. The temperature switch 52 can be controlled and adjusted by operation of the temperature switch 81 on the control panel 80 to set the temperature of the container 20.

When the water in the container 20 is completely released, the level switch 53 in the container support 50 stops the water pump 60.

The electro-magnetic valve 73 is electrically connected to the timer switch 82 and the timer so as to set the timing of the electro-magnetic valve 73 by using the timer switch 82 and the timer. The pipe between the operation cup 30 and the thermal carafe 40 can therefore be controlled so as to control the time that the coffee or tea is to be soaked.

The heater 41 includes semi-conductor and is electrically connected with the hot-cold switch 83. By changing positive and negative poles of the power supply 42 to make cold or hot coffee or tea.

When the operation cup 30 is removed, the limit switch "A" detects the removal and shuts down the water pump 60.

When the thermal carafe 40 is removed, the limit switch "B" detects the removal and shuts down the electro-magnetic valve 73 to stop the coffee or tea from entering the thermal carafe 40.

As shown in Fig. 3, the second embodiment of the coffee or tea maker shows that the container 20 is located above the operation cup 30 such that the container 20, the operation cup 30 and the thermal carafe 40 are arranged from top to bottom. When the container 20 is filled with water, the cover 2 is mounted on the container 20 and the power is switched to "ON", the soaking period and the temperature are set on the control panel 80. The heater 21 starts to heat and when the water temperature reaches the pre-set temperature, the electro-magnetic valve 16 is opened and the hot water enters the operation cup 30 via the pouring port 13. The level switch 53 sends a signal to the control panel 80 to set soaking period when the water in the container 20 is completely released. When the soaking period runs out, the electro-magnetic valve 73 is opened and the coffee or tea enters into the carafe 40 via the bottom hole 72 so as to store the coffee or tea. When the temperature in the operation cup 30 is below the pre-set temperature, the temperature controller 75 activates the heater 74 to heat the coffee or tea. The coffee or tea in the carafe 40 can be made to be hot or cold by changing electrodes 51 mentioned above. There are three limit switches "A", "B" and "C" located beside the container 20, the operation cup 30 and the thermal carafe 40, any one of the container 20, the operation cup 30 and the thermal carafe 40 is removed, the power will be shut down to ensure safety of use.

The water can be supplied in two stages, when the water temperature in the container 20 reaches the pre-set temperature, the electro-magnetic valve 16 is opened and the hot water enters the operation cup 30 via the pouring port 13. After a pre-set amount of hot water is released, the electro-magnetic valve 16 stops, so that the powder of the beverage is mixed with the water. After a 40 seconds waiting period, the electro-magnetic valve 16 is operand and the rest water in the container 20 releases to the operation cup 30.

The water can be supplied in one stage, when the water temperature in the container 20 reaches the pre-set temperature, the electro-magnetic valve 16 is opened and all of the hot water in the container 20 enters the operation cup 30 via the pouring port 13.

While we have shown and described the embodiment in accordance with the present invention, it should be clear to those skilled in the art that further embodiments may be made without departing from the scope of the present invention.

## Claims

1. A coffee or tea maker comprising:
a base, an operation cup, a thermal carafe and a control panel, the thermal carafe removably rested on the base and having a heater at a bottom thereof, the operation cup located on a high board on the base and having a drain hole defined in an underside thereof, a pouring port defined in the base so as to provide water to the operation cup, the high board including a top hole and a bottom hole, the drain hole of the operation cup located corresponding to the top and bottom holes, an electro-magnetic valve located between the top and bottom holes, the control panel including a timer switch which is electrically connected with the electro-magnetic valve, the bottom hole located above the thermal carafe, and
a container support located on the base and a container located on the container support, the container including a heater and a temperature sensor which is electrically connected with a control circuit in the control panel, the control circuit controlling the heater of the container, a release port defined in a bottom of the container and a pipe connected between the release portion and the pouring port.

2. The coffee or tea maker as claimed in claim 1, wherein the container support and the container are located beside the operation cup and the thermal carafe, the pipe includes an inlet which communicates with the release port of the container, a level switch which controls a water pump, an outlet and a path connected between the outlet and the pouring port, a control circuit for activating the water pump when a pre-set temperature is reached is electrically connected with the temperature sensor and the water pump, the level switch is electrically connected with the level controller on the control panel, the level controller controls a water level of the container.

3. The coffee or tea maker as claimed in claim 2, wherein the control circuit includes the temperature sensor and electrodes in the container support, the electrodes are cooperated with the temperature sensor and electrically connected with a temperature switch on the control panel and a temperature controller which controls the heater in the container and the water pump.

4. The coffee or tea maker as claimed in claim 1, wherein the heater includes a semi-conductor and the base includes a power supply which provides electric power to the semi-conductor, the control panel includes a hot-cold switch which is electrically connected with the power supply and changes positive and negative poles of the power supply.

5. The coffee or tea maker as claimed in claim 1, wherein the container includes a limit switch for protecting the container from being overly heated.

6. The coffee or tea as claimed in claim 1, wherein a limit switch is located on the base to detect the thermal carafe and connected to the power supply and the electro-magnetic valve in series, the high board includes a limit switch which detects the operation cup and the limit switch is electrically connected to the electro-magnetic valve in series.

7. The coffee or tea as claimed in claim 2, wherein the container support, the high board and the pouring port are made in one piece in which the path is located.

8. The coffee or tea as claimed in claim 1, wherein the container and the container support are located above the operation cup, the pipe includes the release port in the container, a water outlet and an electro-magnetic valve located between the release port and the pouring port.

9. The coffee or tea as claimed in claim 8, wherein the pipe includes a level switch which sends a signal to the control panel to set soaking period when the water in the container is completely released.
